# EUROPEAN PATENT APPLICATION

(11) **EP 4 424 922 A1**
(43) Date of publication of application: **04.09.2024**
(21) Application number: 22887118.2
(22) Date of filing: 27.10.2022
(51) Int. Cl.: E02F 9/00, E02F 9/20, E02F 9/26, B60R 1/23

(54) **ELECTRIC CONSTRUCTION MACHINE**

(30) Priority: 29.10.2021 JP 2021177458
(71) Applicant: Hitachi Construction Machinery Tierra Co., Ltd., Shiga 528-0061, (JP)
(72) Inventor: ANDOU, Hiroyuki, Koka-shi, Shiga 528-0061 (JP); HORII, Yasutaka, Koka-shi, Shiga 528-0061 (JP); KIHARA, Seiichi, Koka-shi, Shiga 528-0061 (JP); KIMURA, Shogo, Koka-shi, Shiga 528-0061 (JP); KUWAHARA, Takuma, Koka-shi, Shiga 528-0061 (JP)
(74) Representative: MERH-IP Matias Erny Reichl Hoffmann Patentanwälte PartG mbB
(86) International application number: PCT/JP2022/040132
(87) International publication number: WO 2023/074793

(57) **Abstract**

An upper revolving structure (3) of an electric hydraulic excavator (1) includes an electric motor (13) that serves as a power source, a battery (15) for storing electric power to be supplied to the electric motor (13), a power feeding port (16) to which a power feeding cable (17) for feeding electric power to the electric motor (13) or the battery (15) is connected via a relay cable (18), and a camera (23) that monitors the surroundings of a lower traveling structure (2) and the upper revolving structure (3). The camera (23) is attached to the upper revolving structure (3) in a position higher than the power feeding port (16) to capture an image of the power feeding port (16). With this configuration, it is possible to confirm through a monitor (10) the power feeding port (16), the connecting state of the relay cable (18) with respect to the power feeding port (16), and the treading, the catching-in, or the like of the power feeding cable (17) at the working of the electric hydraulic excavator (1).

## Description

### TECHNICAL FIELD

The present invention relates to electric construction machines, such as a hydraulic excavator provided with an electric motor serving as a power source.

### BACKGROUND ART

A hydraulic excavator as a representative example of a construction machine is provided with an automotive lower traveling structure, an upper revolving structure mounted via a revolving device on the lower traveling structure to be capable of revolving thereto and a working mechanism disposed on the front side of the upper revolving structure. In recent years, for suppressing global warming and air pollution, an electric hydraulic excavator provided with an electric motor serving as a power source has been put to practical use. This electric hydraulic excavator supplies hydraulic oil for operation to a hydraulic actuator by driving a hydraulic pump with the electric motor.

The electric hydraulic excavator is usually provided with an electric motor, a battery and a battery charger. Electric power fed from an external power source is supplied via the battery charger, a motor control device and the like to the electric motor, and the battery is charged by the extra electric power. The electric motor is driven by the electric power fed from the external power source or the battery, thereby driving a hydraulic pump to cause the electric hydraulic excavator to revolve the upper revolving structure and carry out an excavating work of earth and sand, or the like using a working mechanism.

Therefore, the electric hydraulic excavator is provided with a power feeding port for feeding the electric power fed from the external power source to a vehicle body, and a power feeding cable extending from the external power source is connected removably to the power feeding port. Because of this configuration, the electric hydraulic excavator causes the battery to be charged with the electric power fed from the external power source and enables the electric motor to be driven by the electric power fed from the external power source, while the battery can be charged with the extra electric power (refer to Patent Documents 1 and 2) .

### PRIOR ART DOCUMENT

### PATENT DOCUMENT

Patent Document 1: Japanese Patent Laid-Open No. 2011-160502 A
Patent Document 2: Japanese Patent Laid-Open No. 2018-84099 A

### SUMMARY OF THE INVENTION

In this way, there are some cases where the electric hydraulic excavator carries out the work in a state where the power feeding cable is connected to the power feeding port. In this case, there is a possibility that the power feeding cable is damaged caused by the treading of the power feeding cable by the traveling vehicle body, the catching-in of the power feeding cable at the revolving of the upper revolving structure, or the like. Because of this, an operator getting in the electric hydraulic excavator is required to promptly know presence and absence of the connection of the power feeding cable to the power feeding port in preparation for driving the electric hydraulic excavator.

However, the power feeding port is usually disposed to be positioned in back of the working mechanism, thus preventing the power feeding cable connected to the power feeding port from coming in contact with the working mechanism disposed on the front side of the vehicle body. For example, in the electric hydraulic excavator according to Patent Document 1 the power feeding port (external power source connecting part) is disposed, which is in the height position between a revolving frame and an operator's seat, in the side part of an exterior cover. In the electric hydraulic excavator according to Patent Document 2 the power feeding port (connecting terminal of a terminal box) is disposed, which is on the front side of an upper cover for covering the upper side, in the exterior cover forming a machine room in back of the operator's seat. In this way, in a case where the power feeding port is in a position different from an eye direction of the operator on the operator's seat (the front side where the working mechanism is disposed), at the confirming whether or not the power feeding cable is connected to the power feeding port, the operator on the operator's seat is required to reverse its body to a direction where the power feeding port is disposed for the confirmation, leading to a problem of deterioration on working efficiency.

In addition, since the electric hydraulic excavator uses the electric motor as the power source, a noise level at the working thereof is lower than that of an engine-mounting hydraulic excavator. As a result, regardless of a state where the electric hydraulic excavator is working or starts to work, an operator who has false recognition that the electric hydraulic excavator has stopped comes possibly closer to the power feeding port for removal of the power feeding cable from the power feeding port. In this case, the operator is required to sequentially confirm a state of the connection of the power feeding cable to the power feeding port and a state of the surroundings of the vehicle body, herein also leading to a problem of the deterioration on working efficiency.

An object of the present invention is to provide an electric construction machine that can confirm a state of the connection of the power feeding cable to the power feeding port and a state of the surroundings of the vehicle body without deteriorating the working efficiency.

An aspect of the present invention is provided with an electric construction machine comprising: an automotive vehicle body; and a working mechanism disposed on the front side of the vehicle body, the vehicle body including: an electric motor serving as a power source; a battery for storing electric power to be supplied to the electric motor; and a power feeding port to which a power feeding cable for supplying the electric power to the electric motor or the battery is connected, characterized by including: a camera for monitoring the surroundings of the vehicle body; and a monitor for displaying an image captured by the camera, wherein the camera is attached on the vehicle body in a position higher than the power feeding port to capture an image of the power feeding port as well as the surroundings of the vehicle body.

According to the aspect of the present invention, the power feeding port can be located within the imaging range of the camera for monitoring the surroundings of the vehicle body, by which it is possible to capture the image of the power feeding port or the power feeding cable connected to the power feeding port as well as the surroundings of the vehicle body.

### BRIEF DESCRIPTION OF THE DRAWINGS

Fig. 1 is a right side view showing an electric hydraulic excavator according to an embodiment of the present invention.
Fig. 2 is an enlarged view showing a camera, a power feeding cable, a cable support member and the like in Fig. 1.
Fig. 3 is a rear view showing the electric hydraulic excavator in a state where a working mechanism is removed, as viewed from backward.
Fig. 4 is a left side view showing, partially broken, an inner part of a cab.
Fig. 5 is a cross section showing a camera main body, a camera cover and the like configuring the camera.
Fig. 6 is an exploded perspective view showing a camera attaching seat of the cab, the camera main body, the camera cover and the like.
Fig. 7 is a right side view of the electric hydraulic excavator showing an imaging range of the camera in the front-back direction.
Fig. 8 is a rear view of the electric hydraulic excavator showing an imaging range of the camera in the left-right direction.
Fig. 9 is a right side view showing a relay cable of an electric hydraulic excavator according to a first modification example.
Fig. 10 is a rear view showing a power feeding cable of an electric hydraulic excavator according to a second modification example.

### MODE FOR CARRYING OUT THE INVENTION

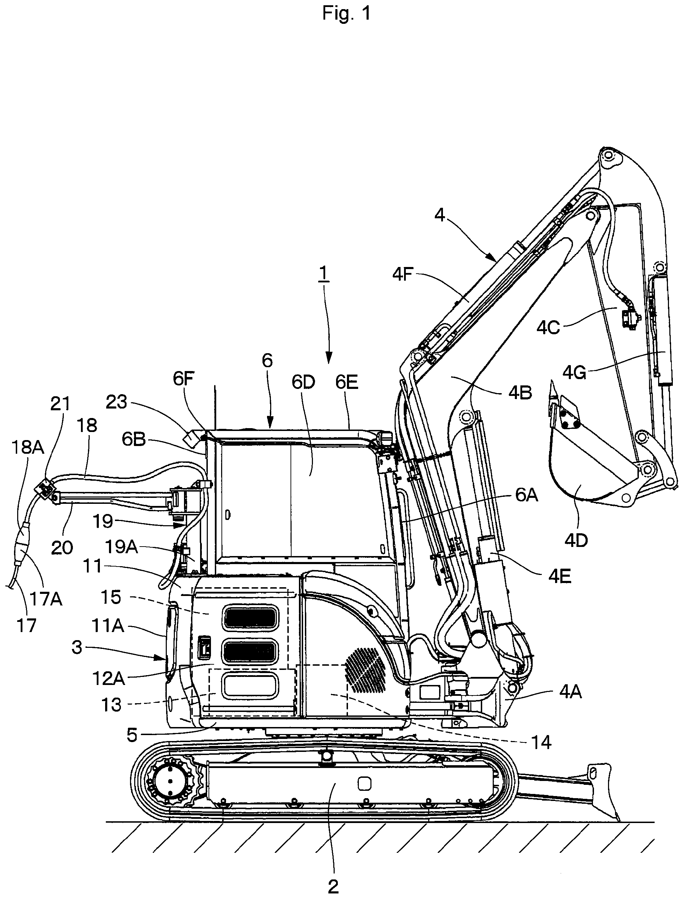

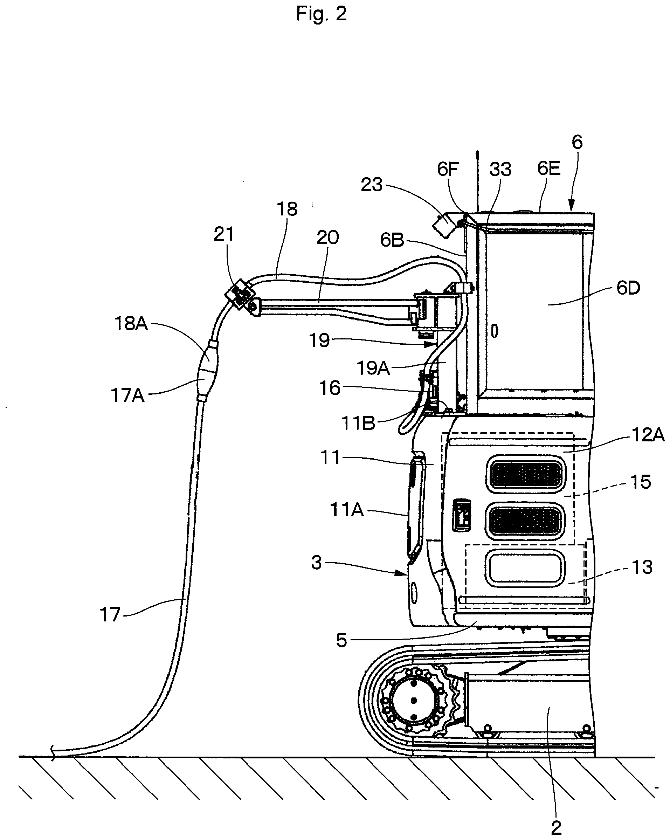

Hereinafter, an electric construction machine according to an embodiment of the present invention will be in detail explained referring to Fig. 1 to Fig. 8 by taking a case of being applied to an electric hydraulic excavator as an example. It should be noted that an explanation will be made of the embodiment by defining a traveling direction of the electric hydraulic excavator as a front-rear direction and a direction perpendicular to the traveling direction as a left-right direction.

An electric hydraulic excavator 1 representative of an electric construction machine is provided with an automotive lower traveling structure 2 of a crawler type in the front-rear direction and an upper revolving structure 3 mounted on the lower traveling structure 2 to be capable of revolving thereto. A vehicle body of the electric hydraulic excavator 1 is configured of the lower traveling structure 2 and the upper revolving structure 3. A swing type working mechanism 4 is disposed on the front side of the upper revolving structure 3. The working mechanism 4 is used to carry out an excavating work of earth and sand, or the like.

The swing type working mechanism 4 is provided with a swing post 4A disposed on the front side of a revolving frame 5 to be described later to be capable of swinging in the left-right direction. A boom 4B is attached to the swing post 4A to be rotatable thereto, and an arm 4C is attached to a tip end of the boom 4B to be rotatable thereto, and a bucket 4D is attached to a tip end of the arm 4C to be rotatable thereto. In addition, the working mechanism 4 is provided with a swing cylinder (not shown) for swinging the swing post 4A, a boom cylinder 4E for rotating the boom 4B, an arm cylinder 4F for rotating the arm 4C, and a bucket cylinder 4G for rotating the bucket 4D.

The upper revolving structure 3 is mounted via a revolving device on the lower traveling structure 2 to be capable of revolving thereto and carries out a revolving movement on the lower traveling structure 2. The upper revolving structure 3 is provided with the revolving frame 5 serving as a base. The revolving frame 5 is provided with a cab 6, a counterweight 11, an exterior cover 12, an electric motor 13, a hydraulic pump 14, a battery 15, which will be described later, and the like, which are mounted thereon.

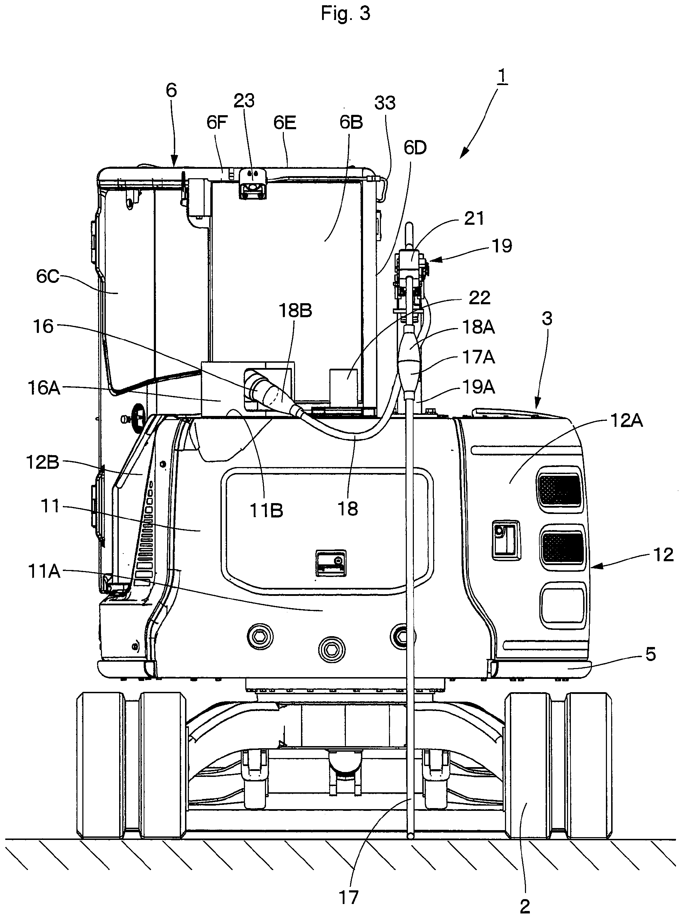

Here, as shown in Fig. 3, a width dimension of the upper revolving structure 3 in the left-right direction is set to a dimension smaller than a vehicle width of the lower traveling structure 2. As a result, the electric hydraulic excavator 1 is configured as a hydraulic excavator having a backward ultra-small revolving specification in which when the upper revolving structure 3 revolves on the lower traveling structure 2, a rear surface 11A of the counterweight 11 is accommodated within 120% of the vehicle width of the lower traveling structure 2.

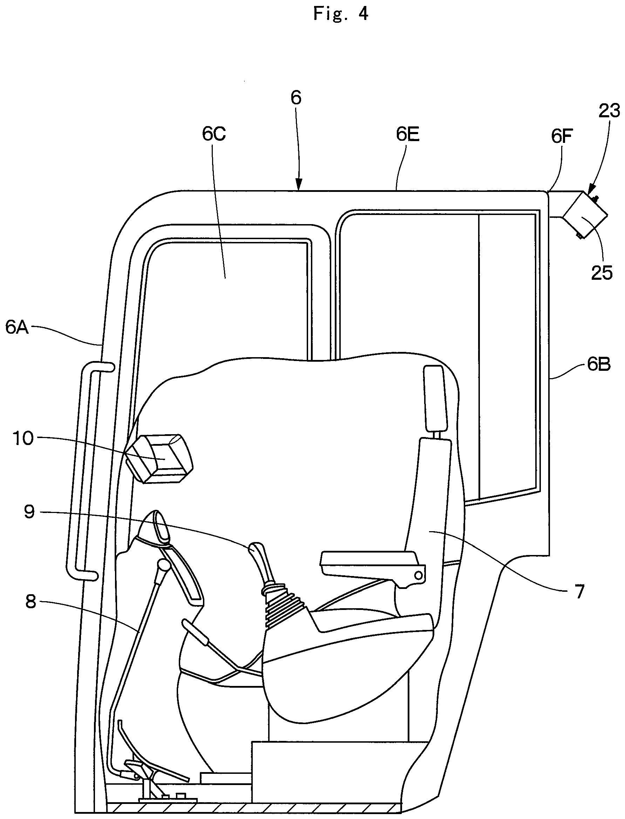

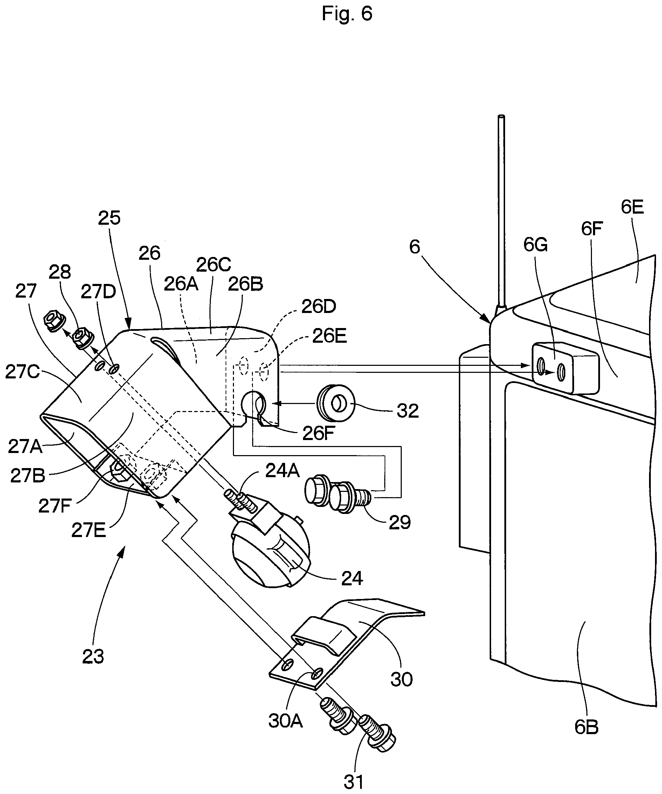

The cab 6 serving as an operator's seat cover is disposed on the left side of the revolving frame 5. The cab 6 is formed in a boxy shape to be surrounded by a front surface 6A, a rear surface 6B, a left side surface 6C, a right side surface 6D and an upper surface 6E, forming an operator's room in which an operator gets. As shown in Fig. 4, an operator's seat 7 for the operator to sit on, a traveling lever pedal 8 for controlling a traveling movement of the lower traveling structure 2, a working operational lever 9 for controlling the revolving movement of the upper revolving structure 3 and the movement of the working mechanism 4, a monitor 10 for displaying images shot by a camera 23 to be described later, and the like, which are arranged in the cab 6. Here, the front surface 6A of the cab 6 covers the operator's seat 7 from the forward, the rear surface 6B covers the operator's seat 7 from the backward, the left side surface 6C and the right side surface 6D cover the operator's seat 7 from the side and the upper surface 6E covers the operator's seat 7 from the upper side. A posterosuperior corner part 6F on which the rear surface 6B and the upper surface 6E of the cab 6 intersect is provided with a camera attaching seat 6G having two female screw holes and the camera 23 is attached on the camera attaching seat 6G (refer to Fig. 6).

The counterweight 11 is positioned to be closer to the rear side than the cab 6 to be disposed on the rear end of the revolving frame 5. The counterweight 11 acts as a weight balance to the working mechanism 4 disposed on the front side of the revolving frame 5. The counterweight 11 rises upward from the rear end of the revolving frame 5 to cover the battery 15 and the like from the backward. The rear surface 11A of the counterweight 11 is formed in an arc shape in such a manner that a central part of the rear surface 11A of the counterweight 11 in the left-right direction projects backward. With this configuration, when the upper revolving structure 3 revolves, the rear surface 11A of the counterweight 11 is accommodated within a constant revolving radius.

Here, the counterweight 11 is disposed, for realizing the backward ultra-small revolution of the upper revolving structure 3, to be close to the forward near the revolving center of the upper revolving structure 3 and an interval between the rear surface 6B of the cab 6 and the rear surface 11A of the counterweight 11 becomes narrower than that of a hydraulic excavator in a specification different from the backward ultra-small revolving specification. A power feeding port 16, a cable support member 19 and a working lamp 22, which will be described later, are arranged on an upper surface 11B of the counterweight 11.

The exterior cover 12 is positioned in front of the counterweight 11 and is disposed on the revolving frame 5. The exterior cover 12 covers the electric motor 13, the hydraulic pump 14, the battery 15 and the like together with the counterweight 11. The exterior cover 12 includes a right exterior cover 12A for covering the electric motor 13, the hydraulic pump 14, the battery 15 and the like from the right side and the upper side, and a left exterior cover 12B for covering the battery 15 and the like from the left side.

The power feeding port 16 is disposed on the left side of the upper surface 11B of the counterweight 11. A power feeding cable 17 extending from an external power source (not shown) is connected to the power feeding port 16. The power feeding port 16 is retained by a cubic casing 16A projecting upward from the upper surface 11B of the counterweight 11 and extends diagonally downward right from the upper side of the upper surface 11B. The battery charger (not shown) is disposed within the exterior cover 12 to charge the battery 15 with electric power fed from the external power source, and electric connection between the battery charger and the power feeding port 16 is established via a cable (not shown).

The power feeding cable 17 establishes electrical connection between the external power source and the power feeding port 16 via a relay cable 18. One end of the power feeding cable 17 is connected to the external power source and a connector 17A serving as a connecting port is attached on the other end of the power feeding cable 17. The relay cable 18 establishes connection between the power feeding cable 17 and the power feeding port 16. A connector 18A is connected to one end of the relay cable 18 and a connector 18B is attached on the other end of the relay cable 18. The connector 18A of the relay cable 18 is connected to the connector 17A of the power feeding cable 17, and the connector 18B of the relay cable 18 is connected to the power feeding port 16. The relay cable 18 establishes connection between the other end of the power feeding cable 17 and the power feeding port 16 in a state of being exposed to the exterior of the upper revolving structure 3.

As a result, the power feeding port 16 is connected via the relay cable 18 to the power feeding cable 17. The electric power of the external power source is supplied via the power feeding cable 17, the relay cable 18, the power feeding port 16, the battery charger, the motor control device and the like (none of them are shown) to the electric motor 13, and the battery 15 is charged with the extra power. Accordingly, the electric motor 13 is driven by the electric power fed from the external power source to drive the hydraulic pump 14. With this configuration, the electric hydraulic excavator 1 carries out an excavating work of earth and sand, and the like by using the working mechanism 4 while revolving the upper revolving structure 3 in a state where the relay cable 18 is connected to the power feeding port 16. At this time, an intermediate part of the relay cable 18 connected to the power feeding port 16 is supported by the cable support member 19.

The cable support member 19 is positioned to be closer to the rear side than the operator's seat 7 and is disposed on the upper revolving structure 3. Specifically, the cable support member 19 is disposed on the upper surface 11B of the counterweight 11 to be spaced rightward from the power feeding port 16 and supports the intermediate part of the relay cable 18 connected to the power feeding port 16. This arrangement reduces occurrence of the treading of the power feeding cable 17 at the traveling of the lower traveling structure 2, the catching-in of the power feeding cable 17 at the revolving of the upper revolving structure 3, and the like. The cable support member 19 includes a stand part 19A and an arm part 20, and projects from the upper surface 11B of the counterweight 11 to the upward over the power feeding port 16.

The stand part 19A is fixed on the upper surface 11B of the counterweight 11. The stand part 19A is formed of, for example, a pipe material and rises vertically upwards from the upper surface 11B of the counterweight 11. The arm part 20 is attached on an upper end of the stand part 19A to be rotatable in a horizontal direction centering on a shaft center of the stand part 19A. The arm part 20 extends in a direction away from the shaft center of the stand part 19A and a cable clamp 21 is disposed on a tip end of the arm part 20.

The cable clamp 21 is disposed on the tip end of the arm part 20. The cable clamp 21 is provided with a pair of clamp members which are openable/closable by a hinge mechanism (not shown) or the like, and the relay cable 18 is clamped by the pair of clamp members for the gripping. Accordingly, opening/closing the clamping members of the cable clamp 21 enables the relay cable 18 to be easily removed from/attached to the cable support member 19. In this way, gripping the relay cable 18 connected to the power feeding cable 17 by the cable clamp 21 disposed in the arm part 20 can produce an appropriate degree of loosening of the relay cable 18 between the cable clamp 21 and the power feeding port 16.

The working lamp 22 is positioned to be closer to the rear side than the operator's seat 7 and is disposed on the upper revolving structure 3. Here, the working lamp 22 is disposed, which is on the side of the relay cable 18 connected to the power feeding port 16, on the upper revolving structure 3, specifically, positioned between the power feeding port 16 and the cable support member 19 and is disposed on the upper surface 11B of the counterweight 11. The working lamp 22 projects upward from the upper surface 11B of the counterweight 11 and switches on at the traveling of the lower traveling structure 2, at the revolving of the upper revolving structure 3 or at the operating of the working mechanism 4 (at the working of the electric hydraulic excavator 1). With this configuration, the event that the electric hydraulic excavator 1 is in the middle of being operating is displayed (informed) to operators around the electric hydraulic excavator 1.

In this case, the working lamp 22 is disposed, which is on the side where the relay cable 18 connected to the power feeding port 16 extends from the power feeding port 16, on the upper revolving structure 3. Because of this arrangement, for example at the night-time working, the power feeding port 16, the cable support member 19, the relay cable 18 disposed between the power feeding port 16 and the cable support member 19 (cable clamp 21), and the like can lightly be illuminated by the light from the working lamp 22 lighting at the working of the electric hydraulic excavator 1. In addition, by disposing the working lamp 22 between the power feeding port 16 and the cable support member 19, even in a case where the upper surface 11B of the counterweight 11 becomes narrow in the electric hydraulic excavator 1 in the backward ultra-small revolving specification, the power feeding port 16, the cable support member 19 and the working lamp 22 can efficiently be arranged as neighbored to each other in the left-right direction.

Next, an explanation will be made of the camera 23 to be used in the present embodiment.

The camera 23 is attached on the upper revolving structure 3 in a position higher than the power feeding port 16 and higher than the cable support member 19 and is disposed toward the backward of the upper revolving structure 3 in a position closer to the front side than the power feeding port 16. Specifically, the camera 23 is attached on the posterosuperior corner part 6F on which the rear surface 6B and the upper surface 6E of the cab 6 intersect. The camera 23 captures an image of the surroundings of the vehicle body composed of the lower traveling structure 2 and the upper revolving structure 3 and projects the image of the surroundings of the vehicle body (for example, the back of the vehicle body) on the monitor 10 within the cab 6. An operator on the operator's seat 7 visually checks the image of the back of the vehicle body projected on the monitor 10, thus making it possible to figure out the state of the back of the vehicle body without visually looking backward by reversing the body from the operator's seat 7, for example.

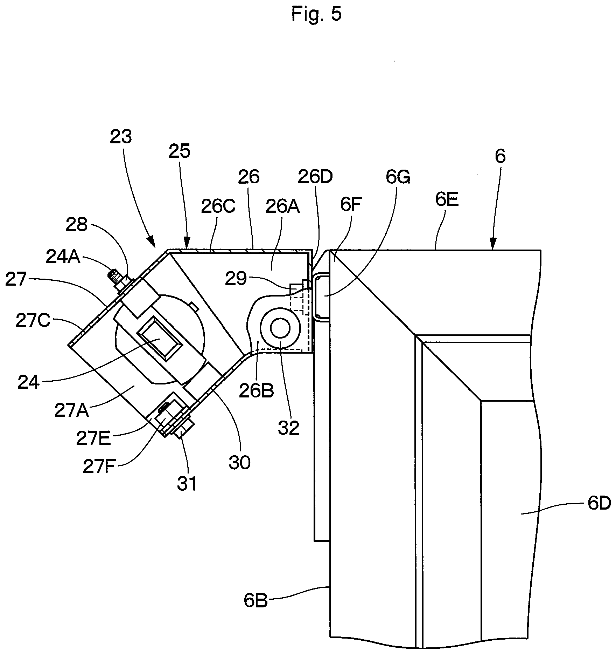

As shown in Fig. 5 and Fig. 6, the camera 23 includes a camera main body 24, a camera cover 25 and a bottom plate 30, which will be described later. The camera main body 24 is configured of, for example, a CCD camera and the like, and two stud bolts 24A are disposed to project thereon. The camera main body 24 is attached via the camera cover 25 on the posterosuperior corner part 6F of the cab 6. The camera main body 24 is connected via a controller (not shown) to the monitor 10 and captures an image of the power feeding port 16, the arm part 20 of the cable support member 19 and the working lamp 22 as well as the back of the vehicle body in the electric hydraulic excavator 1 and projects the image on the monitor 10.

The camera cover 25 is attached on the camera attaching seat 6G disposed in the posterosuperior corner part 6F of the cab 6 in a state of covering the camera main body 24. The camera cover 25 is fixed via the camera attaching seat 6G to the posterosuperior corner part 6F of the cab 6 and includes a base portion 26 projecting backward and a camera attaching portion 27 continuous obliquely downward from the rear end (projecting end) of the base portion 26.

The base portion 26 is formed in a frame shape having an open lower side by a left side plate 26A, a right side plate 26B and an upper plate 26C connecting between upper ends of the left side plate 26A and the right side plate 26B. A front plate 26D is disposed on the front end of the base portion 26 and two bolt through holes 26E corresponding to two female screw holes formed in the camera attaching seat 6G of the cab 6 are formed in the front plate 26D. A gromet attaching groove 26F having an open lower end is formed in the lower side of the right side plate 26B.

The camera attaching portion 27 is formed in a frame shape having an open lower side by a left side plate 27A, a right side plate 27B and an upper plate 27C connecting between upper ends of the left side plate 27A and the right side plate 27B. Two bolt through holes 27D, in which the two stud bolts 24A of the camera main body 24 are inserted, are formed in the upper plate 27C. A bottom-plate attaching plate 27E for connection between the left side plate 27A and the right side plate 27B are fixed to the backward lower ends of the left side plate 27A and the right side plate 27B, and two nuts 27F are welded to the bottom-plate attaching plate 27E.

The two stud bolts 24A are inserted in the bolt through holes 27D of the camera attaching portion 27 and nuts 28 are threaded in the stud bolts 24A, by which the camera main body 24 is fixed to the camera cover 25. In addition, bolts 29 are inserted in the bolt through holes 26E of the base portion 26 and the bolts 29 are threaded in the camera attaching seat 6G of the cab 6, by which the camera main body 24 is fixed via the camera cover 25 to the posterosuperior corner part 6F of the cab 6.

The bottom plate 30 is attached to the lower end of the camera cover 25 to cover the camera main body 24 from the downward. The bottom plate 30 is formed of a plate body bent in a J-letter shape, and two bolt through holes 30A corresponding to the nuts 27F arranged in the bottom-plate attaching plate 27E of the camera attaching portion 27 are arranged on the rear end side of the bottom plate 30. In addition, bolts 31 are inserted in the bolt through holes 26E of the bottom plate 30 and the bolts 31 are threaded in the nuts 27F arranged in the camera attaching portion 27 (bottom-plate attaching plate 27E), by which the bottom plate 30 is fixed to the camera cover 25. With this configuration, the camera main body 24 is covered by the bottom plate 30 from the downward.

An annular gromet 32 is attached to the gromet attaching groove 26F formed in the base portion 26 (right side plate 26B) of the camera cover 25. A camera cable 33 for connection via the controller (not shown) between the camera main body 24 and the monitor 10 is inserted in an inner peripheral side of the gromet 32. As a result, the camera cable 33 is protected by the gromet 32 without direct contact with the camera cover 25.

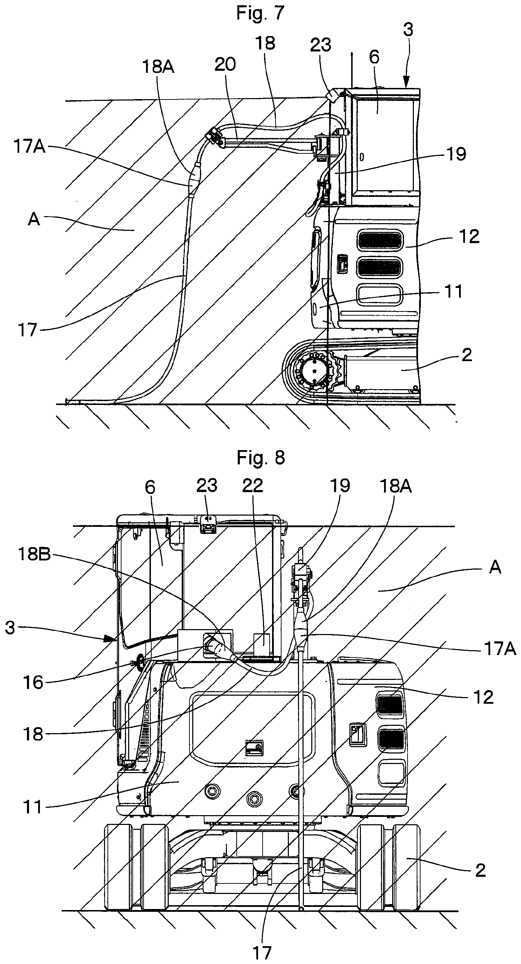

In this way, the camera 23 according to the present embodiment is attached on the posterosuperior corner part 6F of the cab 6 in a height position equal to that of the upper surface 6E of the cab 6, where the ground height is the highest, in the upper revolving structure 3. Accordingly, the camera 23 is positioned to be closer to the front side than the power feeding port 16 and is disposed toward the backward of the upper revolving structure 3 in a position higher than power feeding port 16 disposed on the upper surface 11B of the counterweight 11 and higher than the cable support member 19. With this configuration, the camera 23 (camera main body 24) can capture an image in an imaging range hatched in Fig. 7 and Fig. 8, that is, in a wide range larger than a vehicle width of the lower traveling structure 2, lower than the upper surface 6E of the cab 6, closer to the backward than the rear surface 6B of the cab 6 and to the extent that the power feeding cable 17 contacts the ground. Accordingly, the camera 23 can capture the image of the power feeding port 16 disposed on the upper surface 11B of the counterweight 11, the working lamp 22, the arm part 20 of the cable support member 19, the relay cable 18 connected to the power feeding port 16, the connectors 18A, 18B of the relay cable 18 and the power feeding cable 17 as well as the backward of the vehicle body in the electric hydraulic excavator 1.

Here, since the electric hydraulic excavator 1 operates in the backward ultra-small revolving specification, the interval between the rear surface 6B of the cab 6 and the rear surface 11A of the counterweight 11 becomes narrow. As a result, even in a case where the camera 23 is attached on the posterosuperior corner part 6F of the cab 6, the camera 23 can capture the image until a range just behind the rear surface 11A of the counterweight 11. Accordingly, the operator can confirm, based upon the image projected on the monitor 10, the connecting state of the relay cable 18 (connector 18A) with respect to the power feeding cable 17 (connector 17A), the connecting state of the relay cable 18 with respect to the power feeding port 16, the treading of the power feeding cable 17 at the traveling of the lower traveling structure 2, the catching-in of the power feeding cable 17 at the revolving of the upper revolving structure 3, and the like.

The electric hydraulic excavator 1 according to the present embodiment has the configuration as described above, and hereinafter, an explanation will be made of the operation of the electric hydraulic excavator 1.

In a case where the external power source is in the working site, the connector 18A attached to one end of the relay cable 18 is connected to the connector 17A as the connecting port of the power feeding cable 17 extending from the external power source, and the connector 18B attached to the other end of the relay cable 18 is connected to the power feeding port 16 of the electric hydraulic excavator 1. With this configuration, the electric power fed from the external power source is supplied via the motor control device and the like (not shown) to the electric motor 13, and the electric motor 13 drives the hydraulic pump 14 by the electric power fed from the external power source.

An operator operates the traveling lever pedal 8 in this state, thereby making it possible to cause the electric hydraulic excavator 1 to travel to the working site. After the electric hydraulic excavator 1 moves to the working site, the operator operates the working operational lever 9, thus making it possible to carry out the excavating work of earth and sand and the like by the working mechanism 4 while revolving the upper revolving structure 3.

At the working of the electric hydraulic excavator 1, the camera 23 attached on the posterosuperior corner part 6F of the cab 6 captures an image in the imaging range A of the back of the vehicle body hatched in Fig. 7 and Fig. 8. The power feeding port 16, the arm part 20 of the cable support member 19, the working lamp 22, the relay cable 18, the connectors 18A, 18B of the relay cable 18 and the power feeding cable 17 are included in this imaging range A. Accordingly, the operator can accurately confirm, based upon the image projected on the monitor 10, the connecting state of the relay cable 18 (connector 18A) with respect to the power feeding cable 17 (connector 17A), the connecting state of the relay cable 18 (connector 18A) with respect to the power feeding port 16, whether or not the relay cable 18 is appropriately supported by the arm part 20 of the cable support member 19, the treading of the power feeding cable 17 at the traveling of the lower traveling structure 2, the catching-in of the power feeding cable 17 at the revolving of the upper revolving structure 3, and the like.

Further, it is possible to figure out by the monitor 10, although the electric hydraulic excavator 1 is in the middle of working, the state that the working lamp 22 does not switch on by some sort of cause or the event that an operator who has had the false recognition that the electric hydraulic excavator 1 is in a halting state inadvertently gets close to the power feeding port 16. As a result, the operator is not required to confirm the backward by reversing the body from the operator's seat 7, since the operator can control the movement of the electric hydraulic excavator 1 by operating the traveling lever pedal 8 and the working operational lever 9 in a state of visually looking forward, it is possible to improve the working efficiency of the excavating work and the like.

In this way, according to the present embodiment, the electric hydraulic excavator 1 comprises: the automotive vehicle body composed of the lower traveling structure 2 and the upper revolving structure 3; and the working mechanism 4 disposed on the front side of the upper revolving structure 3, the upper revolving structure 3 including: the electric motor 13 serving as the power source; the battery 15 for storing the electric power to be supplied to the electric motor 13; and the power feeding port 16 to which the power feeding cable 17 for supplying the electric power to the electric motor 13 or the battery 15 is connected via a relay cable 18, characterized by including: the camera 23 for monitoring (capturing an image of) the surroundings of the lower traveling structure 2 and the upper revolving structure 3; and the monitor 10 for displaying the image captured by the camera 23, wherein the camera 23 is attached on the upper revolving structure 3 in the position higher than the power feeding port 16 to capture an image of the power feeding port 16 as well as the surroundings of the lower traveling structure 2 and the upper revolving structure 3.

According to this configuration, the power feeding port 16 is located within the imaging range A of the camera 23 for monitoring (capturing the image of) the surroundings of the lower traveling structure 2 and the upper revolving structure 3. Therefore, it is possible to capture the image of the power feeding port 16, the relay cable 18 connected to the power feeding port 16 and the power feeding cable 17 connected to the relay cable 18 as well as the surroundings of the lower traveling structure 2 and the upper revolving structure 3. With this configuration, the power feeding port 16, the relay cable 18, the power feeding cable 17 and the like, which are imaged by the camera 23 can be projected on the monitor 10 disposed within the cab 6. As a result, an operator can confirm the state of the power feeding port 16, the relay cable 18, the power feeding cable 17 and the like, which are projected on the monitor 10, without turning backwards from the operator's seat 7, while carrying out an excavating work or the like using the electric hydraulic excavator 1 to improve the working efficiency.

In the embodiment, the camera 23 is disposed toward the backward of the lower traveling structure 2 and the upper revolving structure 3 in a position closer to the front side than the power feeding port 16 to capture an image of the power feeding port 16 as well as the backward of the lower traveling structure 2 and the upper revolving structure 3. According to this configuration, the operator can always confirm by the monitor 10 the power feeding port 16, the relay cable 18, the power feeding cable 17 and the like, which are imaged by the camera 23, without turning backwards from the operator's seat 7, while carrying out an excavating work or the like using the electric hydraulic excavator 1.

In the embodiment, the upper revolving structure 3 is provided with the operator's seat 7 and the working lamp 22 that is positioned to be closer to the backward than the operator's seat 7 to display that the lower traveling structure 2, the upper revolving structure 3 or the working mechanism 4 is in the middle of operating, and the camera 23 captures an image of the power feeding port 16 and the working lamp 22 as well as the surroundings or the backward of the lower traveling structure 2 and the upper revolving structure 3. According to this configuration, the working lamp 22 imaged by the camera 23 can be confirmed by the monitor 10, and although the electric hydraulic excavator 1 is in the middle of working, it is possible to figure out the state that the working lamp 22 does not switch on by some sort of cause or the event that an operator who has had the false recognition that the electric hydraulic excavator 1 is in a halting state comes close to the power feeding port 16.

In the embodiment, the cable support member 19 which projects upward from the upper surface 11B of the counterweight 11 to support the relay cable 18 is disposed on the rear side of the upper revolving structure 3, and the camera 23 is disposed toward the backward of the upper revolving structure 3 in a position closer to the front side than one end (connector 18A) and the other end (connector 18B) of the relay cable 18 and is disposed in a position higher than the cable support member 19 to capture an image of the power feeding port 16, the connectors 18A, 18B of the relay cable 18 and the cable support member 19 as well as the backward of the lower traveling structure 2 and the upper revolving structure 3. According to this configuration, in a case of carrying out the excavating work and the like using the electric hydraulic excavator 1, the connecting state of the power feeding cable 17 and the relay cable 18, the connecting state of the power feeding port 16 and the relay cable 18, and the like, and further, whether or not the relay cable 18 is appropriately supported by the cable support member 19 can be confirmed by the image of the cable support member 19 projected on the monitor 10.

In the embodiment, the cable support member 19 includes the stand part 19A that is disposed on the counterweight 11 and rises upward and the arm part 20 that extends in the direction away from the stand part 19A and supports the power feeding cable 17, and the camera 23 captures an image of the arm part 20. According to this configuration, whether or not the relay cable 18 is appropriately supported can be projected on the monitor 10 through the arm part 20 of the cable support member 19.

In the embodiment, the upper revolving structure 3 is provided with the operator's seat 7 and the cab 6 for covering the operator's seat 7 from at least the upward, and the camera 23 is disposed in the cab 6. According to this configuration, without using the dedicated member for attaching the camera 23 in the position higher than the power feeding port 16, the camera 23 can be attached in the position higher than the power feeding port 16 by using the cab 6, and it is possible to capture the image of the power feeding port 16 certainly.

In the embodiment, the upper revolving structure 3 is provided with the operator's seat 7 and the cab 6 for accommodating the operator's seat 7 therein, and the cab 6 is provided with the rear surface 6B for covering the operator's seat 7 from the backward and the upper surface 6E for covering the operator's seat 7 from the upward, and the camera 23 is disposed on the posterosuperior corner part 6F on which the rear surface 6B and the upper surface 6E of the cab 6 intersect. According to this configuration, the imaging range A of the camera 23 can be defined as the wide range, which is lower than the upper surface 6E of the cab 6 and is closer to the backward than the rear surface 6B of the cab 6, in the upper revolving structure 3. Accordingly, for example, the treading of the power feeding cable 17 at the traveling of the electric hydraulic excavator 1, the catching-in of the power feeding cable 17 at the revolving of the upper revolving structure 3, and the like can accurately be imaged by the camera 23, which can be projected on the monitor 10.

In the embodiment, the cable support member 19 is disposed on the rear side of the upper revolving structure 3, the cable support member 19 projecting closer to the upper side than the power feeding port 16 from the upper surface 11B of the counterweight 11 and supporting the relay cable 18. The working lamp 22 is disposed between the power feeding port 16 and the cable support member 19. According to this configuration, for example, at the night-time working the relay cable 18 disposed between the power feeding port 16 and the cable support member 19 can lightly be illuminated by the light from the working lamp 22.

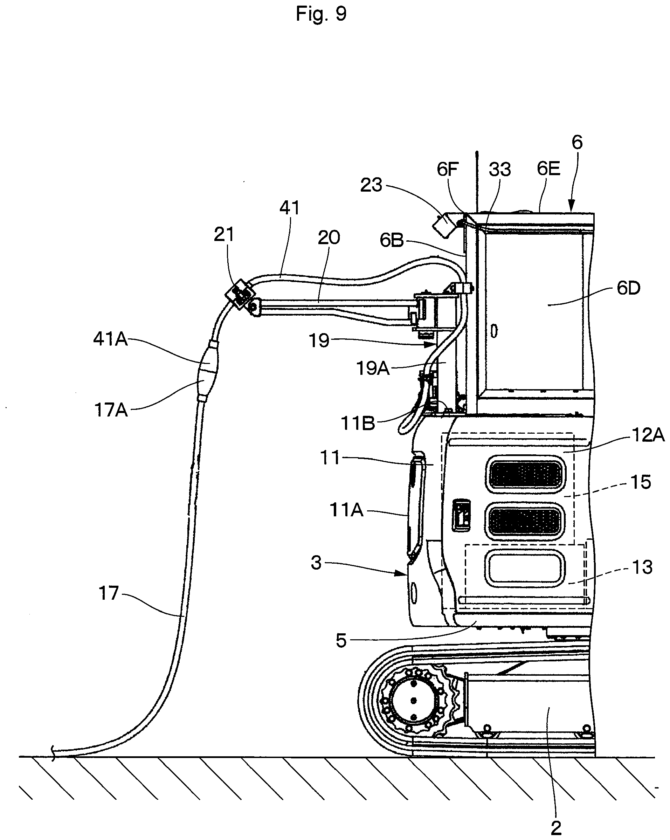

Here, the embodiment shows as an example the configuration that the power feeding port 16 is attached to the casing 16A projecting upward from the upper surface 11B of the counterweight 11, and the connector 18B of the relay cable 18 connected to the power feeding cable 17 is connected to the power feeding port 16. However, the present invention is not limited thereto, but may be configured as a first modification example as shown in Fig. 9, for example.

That is, in the first modification example, a connector 41A is attached to one end of a relay cable 41 disposed outside of the upper revolving structure 3, and the connector 17A of the power feeding cable 17 is connected to the connector 41A. Another connector (not shown) is attached to the other end of the relay cable 41 and the other connector is connected to the power feeding port 16. With this configuration, the electric power fed from the external power source is supplied via the power feeding cable 17, the relay cable 41, the power feeding port 16, the motor control device and the like (none of them are shown) to the electric motor 13, and the battery 15 is charged with the extra electric power. In addition, a one-end side of the relay cable 41 to which the connector 41A is attached is supported by the cable support member 19.

In this case, the camera 23 is disposed toward the backward of the upper revolving structure 3 in a position closer to the front side than the connector 41A of the relay cable 41 and is disposed in a position higher than the cable support member 19 to capture an image of the connector 41A of the relay cable 41 and the cable support member 19 as well as the backward of the lower traveling structure 2 and the upper revolving structure 3. With this configuration, whether or not the connector 41A of the relay cable 41 and the connector 17A of the power feeding cable 17 are certainly connected and whether or not the relay cable 41 is appropriately supported by the cable support member 19 can be confirmed by the image projected on the monitor 10.

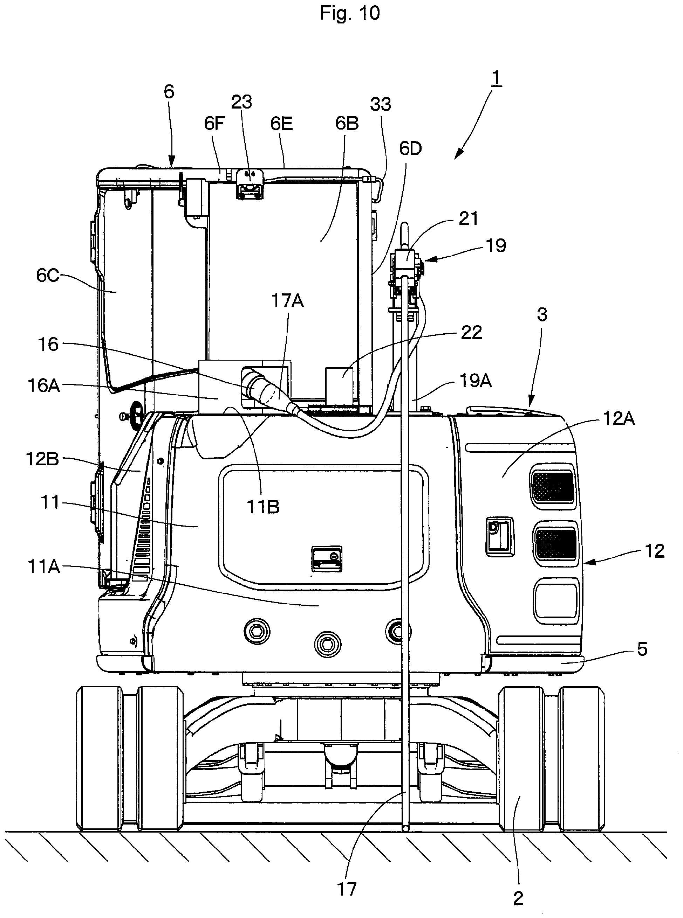

In addition, the embodiment shows as an example the configuration that the power feeding port 16 and the power feeding cable 17 are connected through the relay cable 18. However, the present invention is not limited thereto, but may be configured as a second modification example as shown in Fig. 10, for example.

That is, the second modification example may be so configured that not via a relay cable but the connector 17A attached to the other end of the power feeding cable 17 is directly connected to the power feeding port 16 and an intermediate part of the power feeding cable 17 is supported by the cable support member 19.

In this case, the camera 23 is disposed toward the backward of the upper revolving structure 3 in a position closer to the front side than the power feeding port 16 and is disposed in a position higher than the cable support member 19 to capture an image of the connector 17A of the power feeding cable 17 and the cable support member 19 as well as the backward of the lower traveling structure 2 and the upper revolving structure 3. With this configuration, whether or not the power feeding port 16 and the connector 17A of the power feeding cable 17 are certainly connected and whether or not the power feeding cable 17 is appropriately supported by the cable support member 19 can be confirmed by the image projected on the monitor 10.

It should be noted that the embodiment shows as an example a case of attaching the camera 23 on the posterosuperior corner part 6F of the cab 6. However, the present invention is not limited thereto, but may be, for example so configured that in an electric hydraulic excavator provided with a canopy for covering an operator's seat from the upward, a camera is attached to the rear end part of the canopy. In addition, the present invention may be, for example so configured that a bracket is attached to the rear part of an upper revolving structure to extend closer to the upward than a power feeding port and a camera is attached to an upper end side of the bracket.

### DESCRIPTION OF REFERENCE NUMERALS

2: LOWER TRAVELING STRUCTURE (VEHICLE BODY)
3: UPPER REVOLVING STRUCTURE (VEHICLE BODY)
4: WORKING MECHANISM
6: CAB (OPERATOR'S SEAT COVER)
6B: REAR SURFACE
6E: UPPER SURFACE
6F: POSTEROSUPERIOR CORNER PART
7: OPERATOR'S SEAT
10: MONITOR
13: ELECTRIC MOTOR
15: BATTERY
16: POWER FEEDING PORT
17: POWER FEEDING CABLE
17A: CONNECTOR (CONNECTING PORT)
18, 41: RELAY CABLE
18A, 41A: CONNECTOR (ONE END)
18B: CONNECTOR (OTHER END)
19: CABLE SUPPORT MEMBER
19A: STAND PART
20: ARM PART
22: WORKING LAMP
23: CAMERA

## Claims

1. An electric construction machine comprising:
an automotive vehicle body; and
a working mechanism disposed on the front side of the vehicle body, the vehicle body including: an electric motor serving as a power source;
a battery for storing electric power to be supplied to the electric motor; and
a power feeding port to which a power feeding cable for supplying the electric power to the electric motor or the battery is connected, **characterized by** including:
a camera for monitoring the surroundings of the vehicle body; and
a monitor for displaying an image captured by the camera, wherein
the camera is attached on the vehicle body in a position higher than the power feeding port to capture an image of the power feeding port as well as the surroundings of the vehicle body.

2. The electric construction machine according to claim 1, further comprising:
a relay cable having one end connected to a connecting port of the power feeding cable and the other end connected to the power feeding port, wherein
the power feeding port is connected via the relay cable to the power feeding cable, and
the camera captures an image of the power feeding port, and the one end and the other end of the relay cable as well as the surroundings of the vehicle body.

3. The electric construction machine according to claim 1, wherein
the camera is disposed toward the backward of the vehicle body in a position closer to the front side than the power feeding port to capture an image of the power feeding port as well as the backward of the vehicle body.

4. The electric construction machine according to claim 3, wherein
the vehicle body is provided with an operator's seat and a working lamp that is positioned to be closer to the backward than the operator's seat to display that the vehicle body or the working mechanism is in the middle of operating, and
the camera captures an image of the power feeding port and the working lamp as well as the surroundings of the vehicle body.

5. The electric construction machine according to claim 3, wherein
the vehicle body is provided with an operator's seat and a working lamp that is positioned to be closer to the backward than the operator's seat to display that the vehicle body or the working mechanism is in the middle of operating, and
the camera captures an image of the power feeding port and the working lamp as well as the backward of the vehicle body.

6. The electric construction machine according to claim 1, further comprising:
a cable support member that is disposed on the rear side of the vehicle body to project upward from an upper surface of the vehicle body and support the power feeding cable, wherein
the camera is disposed toward the backward of the vehicle body in a position closer to the front side than the power feeding port and is disposed in a position higher than the cable support member to capture an image of the power feeding port and the cable support member as well as the backward of the vehicle body.

7. The electric construction machine according to claim 6, wherein
the cable support member includes:
a stand part that is disposed on the vehicle body and rises upward; and
an arm part that extends in a direction away from the stand part and supports the power feeding cable, and
the camera captures an image of the arm part.

8. The electric construction machine according to claim 2, further comprising:
a cable support member that is disposed on the rear side of the vehicle body to project upward from an upper surface of the vehicle body and support the relay cable, wherein
the camera is disposed toward the backward of the vehicle body in a position closer to the front side than the one end and the other end of the relay cable and is disposed in a position higher than the cable support member to capture an image of the power feeding port, the one end and the other end of the relay cable and the cable support member as well as the backward of the vehicle body.

9. The electric construction machine according to claim 1, wherein
the vehicle body is provided with an operator's seat and an operator's seat cover for covering the operator's seat from at least the upper side, and
the camera is disposed in the operator's seat cover.

10. The electric construction machine according to claim 1, wherein
the vehicle body is provided with an operator's seat and a cab for accommodating the operator's seat therein,
the cab is provided with a rear surface for covering the operator's seat from the backward and an upper surface for covering the operator's seat from the upper side, and
the camera is disposed on a posterosuperior corner part on which the rear surface and the upper surface of the cab intersect.

11. The electric construction machine according to claim 1, wherein
the vehicle body is provided with an operator's seat and a working lamp that is positioned to be closer to the backward than the operator's seat to display that the vehicle body or the working mechanism is in the middle of operating, further comprising:
a cable support member that is disposed on the rear side of the vehicle body to project closer to the upper side than the power feeding port from an upper surface of the vehicle body and support the power feeding cable, wherein
the working lamp is disposed between the power feeding port and the cable support member.
